# EUROPÄISCHE PATENTSCHRIFT

(11) **EP 3 105 273 B1**
(45) Veröffentlichungstag und Bekanntmachung des Hinweises auf die Patenterteilung: **28.08.2019**
(21) Anmeldenummer: 14821645.0
(22) Anmeldetag: 22.12.2014
(51) Int. Cl.: C08G 18/66, C08G 18/79, C08G 18/10, C08G 18/38, C08G 18/42, C08G 18/44

(54) **ZWEIKOMPONENTEN-BESCHICHTUNGSZUSAMMENSETZUNGEN UND DARAUS HERGESTELLTE BESCHICHTUNGEN MIT HOHER EROSIONSBESTÄNDIGKEIT**
TWO COMPONENT COATING COMPOSITIONS AND COATINGS PRODUCED THEREFROM HAVING HIGH EROSION RESISTANCE
COMPOSITIONS DE REVÊTEMENT BICOMPOSANT ET REVÊTEMENTS AINSI FABRIQUÉS AYANT UNE RÉSISTANCE ÉLEVÉE À L'ÉROSION

(30) Priorität: 13.02.2014 EP 14154945
(43) Veröffentlichungstag der Anmeldung: 21.12.2016
(73) Patentinhaber: BASF Coatings GmbH, 48165 Münster (DE)
(72) Erfinder: HOHNHOLZ, Dieter, 27243 Groß Ippener (DE); BÖLKE, Oliver, 49661 Cloppenburg (DE); KRUPP, Julia, 26129 Oldenburg (DE)
(74) Vertreter: BASF IP Association
(86) Internationale Anmeldenummer: PCT/EP2014/079031
(87) Internationale Veröffentlichungsnummer: WO 2015/120941

(56) Entgegenhaltungen:
- WO-A1-00/20481
- WO-A1-2012/069414
- US-A1- 2011 076 485
- US-A1- 2011 294 934
- US-A1- 2013 172 475
- US-A1- 2013 253 091

## Beschreibung

Die vorliegende Erfindung betrifft Zweikomponenten-Beschichtungszusammensetzungen sowie daraus hergestellte Beschichtungen. Die vorliegende Erfindung betrifft auch ein Verfahren zur Herstellung dieser Beschichtungen sowie die Verwendung der Beschichtungszusammensetzung zur Herstellung von Beschichtungen. Nicht zuletzt betrifft die vorliegende Erfindung die Verwendung der Beschichtungszusammensetzungen zur Verbesserung der Erosionsbeständigkeit.

### Stand der Technik

In verschiedenen Einsatzbereichen besteht ein Bedarf an Beschichtungen, die hohen mechanischen Ansprüchen genügen. Beispielhaft zu nennen sind hier Oberflächen von Objekten, die hinsichtlich der Umgebungsbedingungen hohen Geschwindigkeiten bei gleichzeitiger Belastung durch erodierende Stoffe, beispielsweise Feststoffe oder Flüssigkeiten, ausgesetzt sind. Eine erodierende Belastung erfahren also grundsätzlich Objekte, die einerseits selbst bewegt werden, und andererseits dem Einfluss erodierende Stoffe ausgesetzt sind. Insbesondere zu nennen sind Rotorblätter von Windenergieanlagen oder Hubschraubern und Schiffsschrauben, Luft- und Landfahrzeuge (wie beispielsweise Flugzeuge, Schienenfahrzeuge, Automobile) und Schiffe.

Grundsätzlich können Erosionen hervorgerufen werden durch flüssige oder feste Stoffe, die selbst oder dispers beziehungsweise gelöst in einem anderen gasförmigen oder flüssigen Medium (beispielsweise Luft oder Wasser) vorliegen und durch dieses Medium bewegt werden (beispielsweise Flugsand, Regen und/oder Hagel). Beim Auftreffen auf Objekte beziehungsweise deren Oberflächen wird auf diese eine erodierende Kraft ausgeübt. Beispiele dafür sind die Erosion durch Regen oder Flugsand an Rotorblättern oder im Bereich der Vorflügel von Flugzeugen. Besonders stark sind die erodierenden Einflüsse im Bereich von Kanten der entsprechenden Objekte.

Generell besteht die Möglichkeit, den Verschleißschutz, das heißt insbesondere die Erosionsbeständigkeit, von Objekten durch Beschichtungen der Oberflächen der Objekte zu steuern. Um eine gute Erosionsbeständigkeit zu erhalten, ist bekanntermaßen ein genau abgestimmtes Verhältnis von Flexibilität beziehungsweise Elastizität der Beschichtung einerseits und andererseits der Härte der Beschichtung wichtig. Eine zu hohe Härte beziehungsweise eine zu geringe Elastizität sind einer guten Erosionsbeständigkeit eher abträglich.

Eine Möglichkeit, die Erosionsbeständigkeit zu erhöhen, ist die Erhöhung der Schichtdicken von Beschichtungen. Dies ist aus Gewichtsgründen jedoch in vielen Anwendungen, beispielsweise im Flugzeugbau oder Rotorblattbau von Windenergieanlagen, nicht erstrebenswert.

Weiterhin können Harze mit aromatischen Harzbestandteilen wie beispielsweise Epoxidharze in den Beschichtungszusammensetzungen, auf denen die Beschichtungen basieren, eingesetzt werden. Aufgrund der aromatischen Molekülbestandteile weisen die resultierenden Beschichtungen eine hohe Verschleißfestigkeit auf, besitzen jedoch eine deutlich eingeschränkte UV-Beständigkeit.

Darüber hinaus können Beschichtungszusammensetzungen eingesetzt werden, die Harze enthalten, mit denen licht- oder temperaturinduziert hohe Vernetzungsdichten erzielt werden können. Beispielsweise können UV-Harze (über radikalische oder ionische Polymerisation) oder bestimmte hochreaktive Polyadditionsharze eingesetzt werden. Mit diesen Bindemittelklassen kann ebenfalls die Verschleißbeständigkeit verbessert werden, jedoch gibt es limitierende Faktoren bei der Verwendung auf Großbauteilen wie Rotorblättern oder Flugzeugbauteilen. So besteht bei Formulierungen aus beispielsweise UV-Harzen eine begrenzte Pigmentauswahl, da diese Absorptionsmaxima in Aushärtungswellenlängen aufweisen können und die Schichtdicken in Abhängigkeit von der Pigmentierungshöhe limitiert sind. Weiterhin ergeben sich anlagentechnische Herausforderungen der Sauerstoffinhibierung der UV-Initiatoren. Bei der Verwendung von temperaturinduzierten Lacken (das heißt insbesondere allgemein bekannten Einkomponenten-Lacken) besteht vor allem die Limitierung hinsichtlich der Einbrenntemperaturen im Bezug zur Anlagendimensionierung bei Großbauteilen.

Eine wichtige weitere Eigenschaft von erosionsbeständigen Beschichtungen ist zudem ihre Schleifbarkeit. Das Anschleifen im Rahmen der Vorbehandlung einer auszubessernden beschichteten Oberfläche ist enorm wichtig, um diese beispielsweise als Haftgrund für die Reparaturlackierung vorzubereiten. Gerade im Bereich der Beschichtungen, die einer starken erodierenden Belastung ausgesetzt sind, ist die gute Schleifbarkeit und damit Reparaturfähigkeit sehr wichtig. Bekanntermaßen muss eine Beschichtung aber eine eher hohe Härte aufweisen, um angemessen schleifbar zu sein. Das Erreichen einer guten Schleifbarkeit stellt somit bei erosionsbeständigen Beschichtungen, die eine vergleichsweise hohe Elastizität beziehungsweise Flexibilität aufweisen müssen, eine große Herausforderung dar.

Aus der internationalen Patentanmeldung WO 2010/122157 sind erosionsbeständige Polyurethanbeschichtungen bekannt, die unter Einsatz von aliphatischen Polyesterpolyolen und einer Isocyanatkomponente, beispielsweise Polylactonmodifizierten Isocyanat-Präpolymeren oder Uretdionverbindungen, hergestellt werden. In der WO 2012/032113 A1 werden Zwei-Komponenten-Erosionsschutzbeschichtungszusammensetzungen auf Basis einer Polyolkomponente und einer mit Isocyanatgruppen terminierten Polylacton-Komponente offenbart, die zur Herstellung von Beschichtungen auf Rotorblättern eingesetzt werden können.

Der US 2011/0294934 A1 betrifft Beschichtungssysteme zur Herstellung schnell trocknender flexibler Beschichtungen auf Basis von aromatischen allophanatgruppenhaltigen Prepolymeren und aliphatischen Polyisocyanaten sowie aminofunktionellen Polyasparaginsäureestern als Härter.

Auch wenn die so hergestellten Beschichtungen eine bereits verbesserte Erosionsbeständigkeit haben, ist insbesondere in Hinblick auf aktuelle Herausforderungen beispielsweise im Rotorblattbau von Windenergieanlagen, insbesondere bezüglich windreicher Standorte (Offshore), sowie im Flugzeugbau (Gewichtsverringerung bei gleicher oder besserer Performance) eine weitere Verbesserung wünschenswert.

### Aufgabe

Der vorliegenden Erfindung lag daher die Aufgabe zugrunde, die zuvor beschriebenen Nachteile des Standes der Technik zu beseitigen. Es sollten Beschichtungszusammensetzungen zur Verfügung gestellt werden, die zur Herstellung von Erosionsschutzbeschichtungen eingesetzt werden können, die eine deutlich verbesserte Erosionsbeständigkeit aufweisen als Erosionsschutzbeschichtungen des Standes der Technik. Neben der angestrebten Erosionsbeständigkeit sollten die Zusammensetzungen und daraus hergestellte Beschichtungen eine gute Beständigkeit gegen allgemeine Witterungseinflüsse (beispielsweise UV-Strahlung, Feuchtigkeit) bieten, um insbesondere in den oben bereits beschriebenen Anwendungsgebieten zum Einsatz kommen zu können. Dabei sollten die Beschichtungszusammensetzungen einfach herstellbar und auch bei großen Bauteilen wie Rotorblättern von Windenergieanlagen oder Flugzeugen einfach zu verwenden sein, das heißt insbesondere ohne den Einsatz von UV-Initiatoren und/oder hohen Temperaturen zu Beschichtungen verarbeitbar sein. Trotz der hohen Erosionsbeständigkeit sollten die Beschichtungen trotzdem eine gute Schleifbarkeit aufweisen.

### Lösung

Demgemäß wurde eine Zweikomponenten-Beschichtungszusammensetzung gefunden, umfassend
(1) eine Stammlackkomponente umfassend
   (A) mindestens ein Polycarbonatdiol,
   (B) mindestens einen Polyasparaginsäureester sowie
   (C) mindestens einen mit mindestens einem Organosilan modifizierten Füllstoff
   sowie
(2) eine Härterkomponente umfassend
   (D) mindestens ein aliphatische Polyestergruppen enthaltendes Hexamethylendiisocyanat-Isocyanurat mit einem Isocyanatgehalt von 5 bis 23 %.

Die neue Zweikomponenten-Beschichtungszusammensetzung ist Gegenstand der vorliegenden Erfindung und wird in der Folge auch als erfindungsgemäße Beschichtungszusammensetzung bezeichnet. Bevorzugte Ausführungsformen gehen aus der folgenden Beschreibung und den Unteransprüchen hervor.

Gegenstand der vorliegenden Erfindung ist auch ein Verfahren zur Herstellung von Beschichtungen unter Einsatz der erfindungsgemäßen Beschichtungszusammensetzung sowie eine Beschichtung, die aus der Beschichtungszusammensetzung hergestellt wurde. Gegenstand der Erfindung ist auch die Verwendung der Beschichtungszusammensetzung zur Verbesserung der Erosionsbeständigkeit.

Die mittels der erfindungsgemäßen Beschichtungszusammensetzung lässt sich einfach zu Beschichtungen verarbeiten. Die hergestellten Beschichtungen weisen insbesondere eine ausgezeichnete Erosionsbeständigkeit und gleichzeitig hervorragende Schleifbarkeit auf. Die Beschichtungszusammensetzung beziehungsweise die Beschichtungen eignen sich somit ideal für Substrate, die starken erodierende Einflüssen ausgesetzt sind, beispielsweise Rotorblättern oder Substraten im Flugzeugbau.

### Beschreibung der Erfindung

Die erfindungsgemäße Beschichtungszusammensetzung ist eine Zweikomponenten-Beschichtungszusammensetzung. Dies bedeutet bekanntermaßen, dass im Rahmen der vorliegenden Erfindung die wie unten beschriebene Komponente (1) (Stammlackkomponente) und die wie unten beschriebene Komponente (2) (Härterkomponente) getrennt voneinander hergestellt und gelagert werden und erst kurz vor der Applikation zusammengegeben werden. Die Verarbeitungszeit beziehungsweise Topfzeit (das heißt die Zeit, in der die erfindungsgemäße Beschichtungszusammensetzung bei Raumtemperatur (15 bis 25°C, insbesondere 20°C) verarbeitet werden kann, ohne dass beispielsweise durch entsprechende Vernetzungsreaktionen bei Raumtemperatur eine so starke Viskositätserhöhung auftritt, dass keine Applikation mehr möglich ist), ist bekanntermaßen abhängig von den eingesetzten Bestandteilen, insbesondere von den weiter unten beschriebenen Polycarbonatdiolen (A), Polyasparaginsäureestern (B) und dem Hexamethylendiisocyanat-Isocyanurat (D). Insbesondere beträgt die Verarbeitungszeit des Grundierungsmittels aber mindestens 2 min bis zu 60 min, bevorzugt mindestens 5 min bis zu 60 min. Der Vorteil eines solchen Zweikomponenten-Beschichtungszusammensetzung liegt vor allem darin, dass auch bei großen Bauteilen wie Rotorblättern von Windenergieanlagen oder Flugzeugen eine einfache Verarbeitung möglich ist, insbesondere keine hohen Temperaturen zur Härtung notwendig sind. Bevorzugt wird das erfindungsgemäße Beschichtungsmittel nach dem Aufbringen auf ein Substrat bei weniger als 80°C, insbesondere bevorzugt weniger als 60°C gehärtet.

Unter Härtung ist das dem Fachmann bekannte Vorgehen zu verstehen, das heißt die Überführung einer als Schicht auf ein Substrat aufgebrachten Beschichtungszusammensetzung in den gebrauchsfertigen Zustand, das heißt also in einen Zustand, in der das mit der jeweiligen Beschichtung ausgestattete Substrat transportiert, gelagert und bestimmungsgemäß verwendet werden kann. Diese Härtung erfolgt insbesondere durch chemische Reaktion von reaktiven funktionellen Gruppen der enthaltenen Komponenten, die als Bindemittelbestandteile in dem Beschichtungsmittel enthalten sind. Insbesondere zu nennen ist damit im Rahmen der vorliegenden Erfindung die Reaktion der Hydroxylgruppen des Polycarbonats sowie der Aminogruppen des Polyasparaginsäureesters mit den Isocyanatgruppen des Hexamethylendiisocyanat-Isocyanurats (D). Durch diese Vernetzungsreaktionen und die parallel erfolgende Evaporation von gegebenenfalls vorhandenen organischen Lösemitteln und/oder Wasser wird ein Beschichtungsfilm gebildet, das heißt es wird eine gehärtete Beschichtungsschicht (gehärtete Beschichtung) hergestellt. Die Aktivierung der Reaktionen ist durch thermische Energie möglich, wobei im vorliegenden Fall aber der beschriebene Vorteil der nicht notwendigen hohen Temperaturen besteht. Unter dem Begriff Bindemittel beziehungsweise Bindemittelbestandteil wird hierin entsprechend der einschlägigen DIN EN ISO 4618 der nichtflüchtige Anteil eines Beschichtungsstoffs ohne Pigmente und Füllstoffe verstanden. Spezielle Bindemittelbestandteile sind in diesem Sinne somit neben den Komponenten (A) und (B) auch die Komponente (D) (die auch als Härter oder Vernetzungsmittel bezeichnet werden kann) oder auch lacktypische Additive sowie alle anderen nichtflüchtigen Bestandteile, außer den Pigmenten und Füllstoffen. Schon der Übersichtlichkeit halber wird der Begriff Bindemittel aber hauptsächlich in Bezug auf die vornehmlich für die Filmbildung verantwortlichen Komponenten der Stammlackkomponente (1) verwendet, das heißt insbesondere die Komponenten (A) und (B). Die Komponente (C) wird entsprechend vornehmlich als Härter oder auch Vernetzungsmittel bezeichnet.

Die Zweikomponenten-Beschichtungszusammensetzung enthält mindestens ein Polycarbonatdiol (A) in der Stammlackkomponente (1).

Polycarbonatdiole sind formal betrachtet Veresterungsprodukte, die durch Umsetzung von Kohlensäure mit Polyolen entstehen können. In der Praxis werden die Carbonatstrukturen bekanntermaßen mit Hilfe von Phosgen oder Kohlensäurediestern unter gängigen Reaktionsbedingungen eingeführt. Die Umsetzung mit Diolen, beispielsweise mit 3-Methyl-1,5-pentandiol oder 1,6-Hexandiol, führt dann zu den Polycarbonatdiolen. Selbstverständlich können solche Polycarbonatdiole neben den die Ausgangskomponenten verbindenden Carbonatfunktionen anteilig auch weitere funktionelle Gruppen wie Ester- oder Ethergruppen enthalten, je nach Art und Menge der eingesetzten Ausgangsverbindungen. Vorzugsweise handelt es sich bei dem Polycarbonatdiol um ein lineares Polycarbonatdiol. Bevorzugt sind die Hydroxylgruppen endständig, das heißt an beiden Enden des bevorzugt linearen Polycarbonatdiols angeordnet (hydroxyl-terminiertes Polycarbonatdiol). Ganz besonders bevorzugt handelt es sich um ein aliphatisches Polycarbonatdiol. Das Polycarbonatdiol enthält also bevorzugt keine aromatischen Gruppen, da diese eine deutlich eingeschränkte UV-Beständigkeit aufweisen.

Bevorzugt besitzen die Polycarbonatdiole (A), insbesondere die linearen, aliphatischen Polycarbonatdiole, eine OH-Zahl von 50 bis 500 mg KOH/g, bevorzugt 80 bis 400 mg KOH/g, insbesondere 100 bis 250 mg KOH/g (gemessen nach DIN 53240). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Da es sich bei den Polycarbonaten (A) um diolische Komponenten handelt, sind die OH-Zahl und das zahlenmittlere Molekulargewicht der Komponenten voneinander abhängig beziehungsweise die angegebene OH-Zahl lässt Rückschlüsse auf das zahlenmittlere Molekulargewicht zu. Ein hohes zahlenmittleres Molekulargewicht würde mit einer eher niedrigen OH-Zahl einhergehen. Das zahlenmittlere Molekulargewicht kann breit variieren und liegt im Bereich von beispielsweise 220 g/mol bis 2250 g/mol (gemessen mittels GPC-Analyse mit THF (+0,1% Essigsäure) als Eluent (1 ml/min) auf einer Styrol-Divinylbenzol-Säulenkombination, Kalibrierung mit Polystyrol-Standards).

Geeignete Polycarbonatdiole (A) werden beispielsweise unter der Produktlinie Desmophen® C von der Firma Bayer MaterialScience AG (Leverkusen, Deutschland) angeboten.

Der Anteil der Polycarbonate (A) liegt vorzugsweise im Bereich von 5 bis 30 Gew.-%, bevorzugt 8 bis 25 Gew.-%, besonders bevorzugt 10 bis 20 Gew.-%, jeweils bezogen auf das Gesamtgewicht der erfindungsgemäßen Beschichtungszusammensetzung.

Die Zweikomponenten-Beschichtungszusammensetzung enthält mindestens ein Polyasparaginsäureester in der Stammlackkomponente (1).

Polyasparaginsäurester sind die dem Fachmann im Zusammenhang mit beispielsweise Beschichtungszusammensetzungen bekannten Komponenten. Es handelt sich um Polyamine mit sekundären Aminogruppen, insbesondere zwei sekundären Aminogruppen. Die Komponenten können nach dem Fachmann geläufigen Herstellungsverfahren erhalten werden, beispielsweise durch Addition von primären, bevorzugt aliphatischen Diaminen an Malein- beziehungsweise Fumarsäuredialkylester oder auch durch Addition von primären, bevorzugt aliphatischen Aminen an ungesättigte Polyester. Die Angabe "Alkyl" (beziehungsweise Alkylrest) umfasst lineare, verzweigte und cyclische Alkyleinheiten (beziehungsweise Alkylreste).

Die Polyasparaginsäureester haben bevorzugt eine Aminzahl von 120 bis 300 mg KOH/g, bevorzugt 140 bis 260 mg KOH/g. Die Aminzahl wird gemäß DIN EN ISO 15880 bestimmt.

Bevorzugt sind die Polyasparginsäureester aliphatisch. Sie enthalten demnach bevorzugt keine aromatischen Gruppen. Bevorzugt sind sie gesättigt.

Bevorzugte Polyasparaginsäureester werden durch die folgende Formel (I) beschrieben. 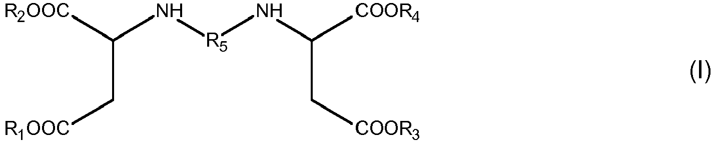 wobei
R₁, R₂, R₃, R₄ unabhängig voneinander für Alkylreste mit 1 bis 12 Kohlenstoffatomen, bevorzugt 1 bis 4 Kohlenstoffatomen, stehen und
R₅ für einen zweibindigen Alkylenrest mit 6 bis 24 Kohlenstoffatomen, bevorzugt 6 bis 16 Kohlenstoffatomen steht.

In besonders bevorzugten Ausführungsformen sind die Reste R₁, R₂, R₃, R₄ Ethylreste. Besonders bevorzugte Alkylenreste R₅ sind

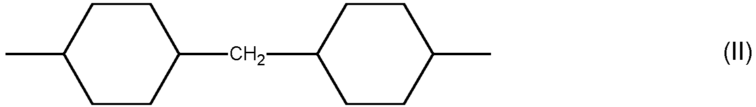

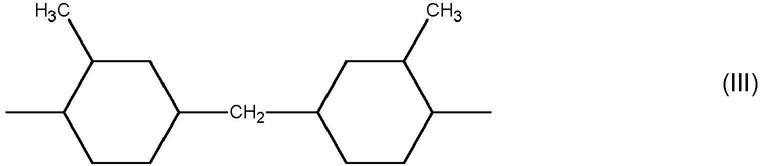

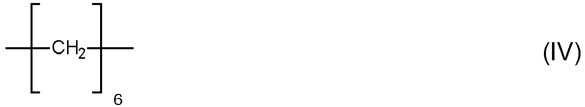

Geeignete Polyasparaginsäureester (B) werden beispielsweise unter der Produktlinie Desmophen® NH von der Firma Bayer MaterialScience AG (Leverkusen, Deutschland) angeboten.

Der Anteil der Polyasparaginsäureester (B) liegt vorzugsweise im Bereich von 5 bis 30 Gew.-%, bevorzugt 8 bis 25 Gew.-%, besonders bevorzugt 10 bis 20 Gew.-%, jeweils bezogen auf das Gesamtgewicht der erfindungsgemäßen Beschichtungszusammensetzung.

Die Zweikomponenten-Beschichtungszusammensetzung enthält mindestens einen mit mindestens einem Organosilan modifizierten Füllstoff (C) in der Stammlackkomponente (1).

Als zu modifizierende (das heißt noch nicht mit Organosilanen modifizierte) Füllstoffe kommen grundsätzlich alle die dem Fachmann im Zusammenhang mit Beschichtungszusammensetzungen bekannten Füllstoffe, insbesondere anorganische Füllstoffe, in Frage. Zu verstehen sind darunter unterschiedliche, beispielsweise in körniger oder in Pulverform eingesetzte Substanzen, die zum Erreichen bestimmter physikalischer Eigenschaften von Beschichtungszusammensetzungen verwendet werden und im jeweiligen Anwendungsmedium unlöslich sind. Hierzu gehören insbesondere anorganische Füllstoffe, nämlich Carbonate wie Calciumcarbonat, Dolomit oder Bariumcarbonat, Sulfate wie Calciumsulfat und Bariumsulfat, Silikate, gegebenenfalls Schichtsilikate, wie Talkum, Pyrophyllit, Glimmer, Kaolin, Feldspat, gefällte Calcium-, Aluminium-, Calcium-/Aluminium-, Natrium-/Aluminium-Silikate und Mullit, Wollastonit, Siliciumdioxid, insbesondere Quarz und Cristobalit. Im Rahmen der vorliegenden Erfindung werden Siliciumdioxide der Gruppe der Silikate untergeordnet. Weitere anorganische Füllstoffe sind gefällte Kieselsäuren oder pyrogene Kieselsäuren sowie Metalloxide wie Aluminium- und Magnesiumhydroxid.

Bevorzugte anorganische Füllstoffe sind Silikate. Insbesondere bevorzugt ist Wollastonit. Wollastonit ist bekanntermaßen eine gängige Bezeichnung für Calciummetasilikat, wobei im natürlich vorkommenden Wollastonit bis zu 2 Gew.-% der Calciumionen durch Magnesium-, Eisen- und/oder Manganionen ersetzt sein können.

Bei dem Füllstoff (C) handelt es sich um einen mit Organosilanen modifizierten Füllstoff. Der zu modifizierende Füllstoff dient also als Substrat, auf das die Organosilane aufgebracht werden. Eine solche Beschichtung von Füllstoffen kann unter grundsätzlich bekannten Bedingungen erfolgen, wobei in Abhängigkeit von den Reaktionsbedingungen und/oder Substrateigenschaften eine Physisorption und/oder Chemisorption der Organosilane stattfindet. Das Beschichtungs- beziehungsweise Modifizierungsverfahren kann beispielsweise in wässriger Lösung, gegebenenfalls in Anwesenheit von Katalysatoren wie Säuren oder Basen, über Hydrolyse und anschließende Kondensation erfolgen. Ein klassisches Beispiel ist die Hydrolyse entsprechend hydrolysierbarer Bindungen im Organosilan (beispielsweise -Si-OCH₃-Bindung) und die anschließende Kondensation mit Hydroxylgruppen auf der Füllstoffoberfläche, beispielsweise den Hydroxylgruppen einer Silikatoberfläche.

Organosilane sind dem Fachmann bekannt. Es handelt sich um von reinen Silanen (das heißt binären aus Si und H bestehenden Verbindungen) abgeleitete Komponenten (Derivate von reinen Silanen), in denen zumindest anteilig Wasserstoff durch einen organischen Rest substituiert ist und dieser Rest über ein Kohlenstoffatom mit dem Silicium verbunden ist. Im Rahmen der vorliegenden Erfindung werden Verbindungen also dann als Organosilane bezeichnet, wenn sie zumindest eine Si-C-Bindung enthalten. Als organische Reste kommen beispielsweise reine Alkylreste oder auch Alkylreste, in denen zumindest ein Wasserstoffrest durch eine funktionelle Gruppe wie eine Aminogruppe substituiert ist, in Frage. Im Einklang mit gebräuchlichen Definitionen werden als Organosilane auch Verbindungen bezeichnet, in denen alle der im reinen Silan vorhandenen, an Si gebundene Wasserstoffreste durch andere Reste substituiert sind, solange zumindest eine Si-C-Bindung besteht. Gängige Reste, durch die Wasserstoffreste substituiert sind, sind neben den oben beschriebenen organischen Resten beispielsweise Hydroxylgruppen, Alkoxygruppen oder Halogene. Solche Organosilane können monomeren, oligomeren oder auch polymeren Charakter haben (zur Definition von oligomeren und polymeren Organosilanen siehe unten).

Bevorzugte, zur Modifizierung eingesetzte Organosilane können über die folgende allgemeine Formel (V) beschrieben werden:

X₄₋ₙ₋ₘSi-Rₙ(-A-B)ₘ (V)

wobei
X = OH, Halogen, Alkoxy, insbesondere Methoxy und Ethoxy, Aryloxy,
R = Alkyl, bevorzugt C₁ bis C₁₂-Alkyl, Phenyl oder H,
A = zweibindiger organischer Rest, insbesondere zweibindiger Alkylenrest, bevorzugt C₁ bis C₆-Alkylen, insbesondere C₁ bis C₃-Alkylen,
B = Amino-, Hydroxyl-, Epoxy-, Epoxypropyloxy, Hydroxyalkyl-, Acetoxy-, Isocyanat-, Acryloxy-, Methacryloxy-, Imidazol-, Ureido-,Vinylgruppe,
n, m = 0,1,2,3, mit n+m ≤ 3, bevorzugt 1 ≤ n+m ≤ 3

Die bevorzugten Organosilane weisen also mindestens eine Gruppe X auf, welche bekanntermaßen in beispielsweise wässriger Lösung leicht hydrolysierbar sind und über eine anschließende Kondensation mit einer Füllstoffoberfläche, die Hydroxylgruppen aufweist, beispielsweise eine Silikatoberfläche, verknüpft werden können. Bevorzugt ist X eine Methoxy- oder Ethoxygruppe.

Durch entsprechende Wahl der Substituenten kann also eine individuell angepasste Modifizierung der Füllstoffoberfläche erfolgen. In jedem Fall wird die Oberfläche der anorganischen Füllstoffe durch die Anlagerung der Organosilane hydrophobisiert. Dabei kann eine ausschließliche Modifizierung mit Silanen, die Alkylgruppen tragen, erfolgen (m = 0) oder eine Modifizierung mit funktionellen Gruppen wie beispielsweise Aminogruppen erfolgen (m > 0). Es können auch Gemische verschiedener Silane eingesetzt werden, beispielsweise solche mit lediglich Alkylgruppenfunktionalität (m = 0) und solche, die zumindest anteilig funktionelle Gruppen wie Aminogruppen enthalten (m > 0).

Möglich zur Modifizierung ist neben dem Einsatz oder anstelle des Einsatzes der Organosilane der Formel (V) auch der Einsatz von anderen Organosilanen, beispielsweise höhermolekularen Organosilanen. Solche Organosilane können auch als oligomere oder polymere Organosilane bezeichnet werden, in denen beispielsweise mehrere der oben genannten Organosilane der Formel (V) über die enthaltenen hydrolysierbaren Gruppen miteinander kondensiert vorliegen und erst dann über noch vorhandene weitere hydrolysierbare Gruppen auf die Oberfläche der Füllstoffe aufgebracht werden. Eine wie beschriebene Kondensierung von monomeren Silanen untereinander kann im Übrigen selbstverständlich schon aus rein statistischen Gründen auch während des Verfahrens zur Modifizierung von Füllstoffen mit den Organosilanen der Formel (V) auftreten. Das heißt, es werden beispielsweise Organosilane der Formel (V) eingesetzt, wobei diese dann nicht nur in ihrer monomeren Ausgangsform, sondern auch nach einer Kondensierung untereinander in oligomerer oder polymerer Form auf der Füllstoffoberfläche anknüpfen können. Im Rahmen der vorliegenden Erfindung wird ein Organosilan als oligomer bezeichnet, wenn es im Mittel aus zwei bis fünf gleichen oder verschiedenen monomeren Organosilaneinheiten (das heißt solchen, die nur ein Siliciumatom enthalten), aufgebaut ist. Ein polymeres Organosilan weist entsprechend mehr als 5 Einheiten auf.

Beispielhaft seien die folgende Organosilane genannt. Propyltrimethoxysilan, Propyltriethoxysilan, Isobutyltrimethoxysilan, n-Octyltrimethoxysilan, i-Octyltrimethoxysilan, n- Octyltriethoxysilan, n-Decyltrimethoxysilan, Dodecyltrimethoxysilan, Hexadecyltrimethoxysilan, Vinyltrimethoxysilan, 3-Aminopropyltrimethoxysilan, 3- Methacryloxytrimethoxysilan, 3-Glycidyloxypropyltrimethoxysilan, beta- (3, 4- Epoxycyclohexyl)-ethyltrimethoxysilan, gamma-Isocyanatopropyltri- methoxysilan, 1,3-bis (3-glycidoxypropyl)-1, 1,3, 3-tetramethyldisiloxan, Ureidopropyltriethoxysilan sowie deren homogene und heterogene Oligomere und Polymere. Solche Silane sind beispielsweise unter den Handelsnamen Dynasylan oder Geniosil erhältlich.

Bevorzugt werden im Rahmen der vorliegenden Erfindung Silane eingesetzt, die Aminogruppen enthalten, insbesondere Aminogruppen-haltige organische Reste, die über ein Kohlenstoffatom an Silicium gebunden sind.

Die Teilchengröße der modifizierten Füllstoffe (C) ist an sich kein kritischer Parameter und liegt beispielsweise in den für Füllstoffe gängigen Bereichen von einigen Mikrometern (insbesondere mittlere Teilchengröße (d₅₀-Wert) 0,1 bis 100 µm, bevorzugt 1 bis 50 µm, gemessen mittels Laserbeugung gemäß ISO 13320:2009). Die Menge der Organosilanbeschichtungen solcher Füllstoffe beträgt beispielsweise zwischen 0,2 und 5 Gew.-%, bezogen auf das Gesamtgewicht des modifizierten Füllstoffs.

Solche Füllstoffe (C) können im Handel erhalten werden, beispielsweise unter den Handelsbezeichnungen Tremin, Tremica oder Silbond der Firma HPF The Mineral Engineers.

Der Anteil der Füllstoffe (C) liegt vorzugsweise im Bereich von 5 bis 25 Gew.-%, bevorzugt 6 bis 20 Gew.-%, besonders bevorzugt 8 bis 15 Gew.-%, jeweils bezogen auf das Gesamtgewicht der erfindungsgemäßen Beschichtungszusammensetzung.

Die Zweikomponenten-Beschichtungszusammensetzung enthält mindestens ein aliphatische Polyestergruppen enthaltendes Hexamethylendiisocyanat (HDI)-Isocyanurat (D) mit einem Isocyanatgehalt von 5 bis 23 %.

Bekanntermaßen lassen sich Isocyanurate bei Anwesenheit bestimmter Katalysatoren, beispielsweise Natriumformiat, Kaliumacetat, tertiären Aminen oder Triphenylphosphinen, aus verschiedensten Isocyanaten herstellen. Dabei bilden sich die sehr stabilen, selbst bei hohen Temperaturen von beispielsweise über 100°C beständigen Isocyanuratringsysteme, bestehend aus jeweils drei Isocyanatgruppen. Jede der drei Isocyanatgruppen stammt dabei von drei verschiedenen Molekülen des jeweils eingesetzten Isocyanats, das heißt es bilden sich trimere Strukturen. Beim Einsatz von Polyisocyanaten, beispielsweise Diisocyanaten wie HDI, kann eine Zwischenvernetzung auftreten, sodass mehrere Isocyanuratringe miteinander verknüpft werden können. Bekanntermaßen möglich ist zudem, dass beispielsweise zur Reaktivitätsanpassung der Isocyanurate bei deren Herstellung noch Anteile von verbrückenden Diolen, beispielsweise Hexandiol, zugegeben werden können und auf diese Weise mehrere Isocyanuratringsysteme miteinander verbunden werden können.

Das Isocyanurat (D) enthält aliphatische Polyestergruppen, das heißt Gruppen, die sich wiederholende Struktureinheiten -R-C(=O)-O-C-, wobei R = zweibindiger, aliphatischer Rest, enthalten. Bevorzugte aliphatische Polyestergruppen sind Polylactongruppen, insbesondere Polycaprolactongruppen. Polycaprolactone und deren Herstellung, beispielsweise durch Umsetzung eines Monoalkohols mit epsilon-Caprolacton, sind bekannt. Sie können beispielsweise nach gängigen Methoden über Reaktion der mindestens einen in ihnen vorhandenen Hydroxylgruppen mit einer Isocyanatgruppe in das Isocyanurat eingeführt werden.

Durch die enthaltenen aliphatischen Polyestergruppen und die gegebenenfalls erfolgende Zwischenvernetzung weisen die Hexamethylendiisocyanat (HDI)-Isocyanurate (D) einen niedrigeren Isocyanatgehalt auf als beispielsweise ein reines HDI-Trimer. Während letzteres einen Isocyanatgehalt von etwa 25 % aufweist (Molekulargewicht 3x NCO = 126 g/mol; Molekulargewicht des rein trimeren Isocyanurats aus HDI = 504,6 g/mol), besitzt das Isocyanurat (D) einen Isocyanatgehalt von 5 bis 23 %, bevorzugt 6 bis 20 %, insbesondere bevorzugt 7 bis 17 %, ganz besonders bevorzugt 8 bis 14 %. Der Isocyanatgehalt wird im Rahmen der vorliegenden Erfindung gemäß DIN EN ISO 11909 durch Umsetzung der jeweiligen Probe mit überschüssigem Dibutylamin und Rücktitration des Überschusses mit Salzsäure gegen Bromphenolblau bestimmt.

Das zahlenmittlere Molekulargewicht der Hexamethylendiisocyanat-Isocyanurate (D) kann in Bereichen von beispielsweise 600 bis 4000 g/mol, bevorzugt 800 bis 2000 g/mol, liegen.

Die Hexamethylendiisocyanat (HDI)-Isocyanurate (D) sind jedenfalls Polyisocyanate. Dies bedeutet, dass sie in Mittel jedenfalls mehr als eine Isocyanatgruppe pro Molekül, bevorzugt mehr als zwei Isocyanatgruppen pro Molekül, besonders bevorzugt mehr als zwei bis höchstens drei Isocyanatgruppen pro Molekül enthalten. Die Anzahl an Isocyanatgruppen pro Molekül kann problemlos über den Isocyanatgehalt und das zahlenmittlere Molekulargewicht des jeweiligen Isocyanurats ermittelt werden.

Entsprechende Hexamethylendiisocyanat-Isocyanurate (D) sind im Handel, beispielsweise in lösemittelfreier Form oder als Lösung in an sich bekannten und weiter unten beschriebenen Lösemitteln, erhältlich und können ohne weiteres in der erfindungsgemäßen Beschichtungszusammensetzung eingesetzt werden. Beispielhaft wird auf Handelsprodukte der Produktlinie Desmodur, beispielsweise Desmodur N 3800, der Firma Bayer verwiesen.

Der Anteil des mindestens einen Hexamethylendiisocyanat-Isocyanurate (D) liegt vorzugsweise im Bereich von 20 bis 60 Gew.-%, bevorzugt 25 bis 55 Gew.-%, besonders bevorzugt 30 bis 50 Gew.-%, jeweils bezogen auf das Gesamtgewicht der erfindungsgemäßen Beschichtungszusammensetzung.

Als weitere Bestandteile kann die erfindungsgemäße Beschichtungszusammensetzung unterschiedlichste dem Fachmann auf dem Gebiet bekannten Lackkomponenten enthalten.

Die Beschichtungszusammensetzung kann organische Lösemittel und/oder Wasser enthalten. Organische Lösemittel sind aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat, Methoxypropylacetat oder Ethylethoxypropionat, Ether, Alkohole, Chlorkohlenwasserstoffe oder Mischungen aus den vorgenannten Lösemitteln.

Es ist aber von besonderem Vorteil, dass das erfindungsgemäße Beschichtungsmittel lösemittelfrei hergestellt werden kann. Die ansonsten enthaltenen Komponenten lassen trotzdem eine wie unten beschriebene Applikation auf ein Substrat zu. Auf diese Weise weist die Beschichtungszusammensetzung insbesondere durch Vermeidung von organischen Lösemitteln auch ein hochwertiges ökologisches Profil auf. Der Ausdruck "lösemittelfrei" ist dem Fachmann grundsätzlich bekannt. Bevorzugt ist darunter zu verstehen, dass die Beschichtungszusammensetzung weniger als 10 Gew.-% organische Lösemittel enthält. Bevorzugt sind weniger als 7,5 Gew.-% organische Lösemittel, insbesondere bevorzugt weniger als 5 Gew.-% organische Lösemittel, ganz besonders bevorzugt weniger als 2,5 Gew.-% organische Lösemittel, vorhanden. Die Angaben beziehen sich jeweils auf das Gesamtgewicht der Beschichtungszusammensetzung. Organische Lösemittel werden also bevorzugt nicht explizit zugegeben, um beispielsweise die Viskosität der Zusammensetzung anzupassen. Sie werden lediglich, wenn überhaupt, durch den Einsatz von beispielsweise typischen Lackadditiven, welche gegebenenfalls in organischen Lösemitteln gelöst kommerziell erworben werden können, in geringen Mengen in der Beschichtungszusammensetzung eingesetzt. Bevorzugt enthält die Beschichtungszusammensetzung auch kein Wasser beziehungsweise nur untergeordnete Mengen an Wasser (wasserfrei). Insbesondere bevorzugt ist weniger als 5 Gew.-%, bevorzugt weniger als 2,5 Gew.-% Wasser, bezogen auf das Gesamtgewicht der Beschichtungszusammensetzung, enthalten. Es wird also bevorzugt lediglich, wenn überhaupt, durch den Einsatz von beispielsweise typischen Lackadditiven, in der Zusammensetzung eingesetzt.

Die erfindungsgemäße Beschichtungszusammensetzung kann neben dem mindestens einen aliphatische Polyestergruppen enthaltenden Hexamethylendiisocyanat (HDI)-Isocyanurat (D) mit einem Isocyanatgehalt von 5 bis 23 % noch mindestens ein weiteres, davon verschiedenes Polyisocyanat enthalten. Bevorzugt ist allerdings, dass das Isocyanurat (D) in einem Anteil von mindestens 50 Gew.-%, insbesondere bevorzugt 70 bis 95 Gew-%, bezogen auf die Gesamtmenge der in der Beschichtungszusammensetzung enthaltenen Polyisocyanate, eingesetzt wird. Als Polyisocyanat wird eine Verbindung dann bezeichnet, wenn sie im Mittel mehr als eine Isocyanatgruppe pro Molekül enthält.

Als weitere Polyisocyanate können die an sich bekannten Verbindungen wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat (IPDI), 2-Isocyanatopropylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, Diisocyanate oder Mischungen aus diesen Polyisocyanaten verwiesen. Bevorzugt werden dabei die an sich bekannten Dimere und/oder Trimeren der genannten Polyisocyanate eingesetzt, das heißt also insbesondere die an sich bekannten und auch im Handel erhältlichen Uretdione und Isocyanurate der oben genannten Polyisocyanate. Bevorzugt werden aliphatische Polyisocyanate eingesetzt. Insbesondere bevorzugt werden keine aromatischen Polyisocyanate eingesetzt. Bevorzugte weitere Polyisocyanate sind Hexamethylendiisocyanat und Isophorondiisocyanat sowie Mischungen hiervon, insbesondere deren vom Isocyanurat (D) unterschiedliche Trimere und Dimere wie Isocyanurate und Uretdione. Solche Polyisocyanate sind im Handel erhältlich. Sofern vorhanden, werden die weiteren Polyisocyanate in der Härterkomponente eingesetzt.

Die erfindungsgemäße Beschichtungszusammensetzung kann ein Molekularsieb oder mehrere Molekularsiebe enthalten. Molekularsieb ist die Bezeichnung für natürliche oder synthetische Zeolithe. Sie weisen bekanntermaßen eine vergleichsweise hohe innere Oberfläche (ca. 600 bis 700 m²/g) und einheitliche Porendurchmesser auf. Dadurch ergibt sich ein relativ starkes Adsorptionsvermögen. Vorzugsweise enthält die Beschichtungszusammensetzung 1 bis 10 Gew.-%, bezogen auf das Gesamtgewicht der Zusammensetzung, mindestens eines Molekularsiebs. Geeignete Molekularsiebe weisen eine Porengröße von 2 bis 10, vorzugsweise 3 bis 4 Angström auf. Beispielsweise können hochporöse Aluminiumsilicate mit einer Porengröße von 3 Angström eingesetzt werden.

Die erfindungsgemäße Beschichtungszusammensetzung kann Katalysatoren für die Katalyse der Reaktion von Hydroxylgruppen und Aminogruppen mit Isocyanatgruppen enthalten. Vorzugsweise enthält die Beschichtungszusammensetzung 0,01 bis 2 Gew.-%, bezogen auf das Gesamtgewicht der Zusammensetzung, mindestens eines Katalysators. Bevorzugt enthält die erfindungsgemäße Beschichtungszusammensetzung 0,02 bis 1 Gew.-%, jeweils bezogen auf das Gesamtgewicht der Zusammensetzung, mindestens eines Katalysators. Geeignete Katalysatoren sind die bekannten Metallkatalysatoren wie beispielsweise Zinn-, Molybdän-, Zirkon oder Zinkkatalysatoren sowie aminische Katalysatoren wie zum Beispiel 2-(2-Dimethylamino-ethoxy)ethanol. Besonders geeignete Katalysatoren sind Zinnverbindungen wie Dimethylzinndilaurat oder Dibutylzinndilaurat, die, wie alle vorgenannten Katalysatoren, eine Reaktion zwischen den HDI-Isocyanuraten (D) und den hydroxylgruppen- und amingruppenhaltigen Komponenten (A) und (B), gegebenenfalls auch (C), katalysieren.

Schließlich können die erfindungsgemäßen Beschichtungsmittelzusammensetzungen auch noch weitere von den bereits beschriebenen Komponenten verschiedene Bestandteile enthalten. Diese Bestandteile umfassen hierbei beispielsweise typische Lackadditive wie Antioxidantien, Entlüftungsmittel, Netzmittel, Dispergiermittel, Verlaufmittel und Entschäumer, beispielsweise solche auf Polysiloxanbasis, Haftvermittler, beispielsweise solche auf Silanbasis, Rheologiehilfsmittel wie Verdickungsmittel, Antiablaufmittel und Thixotropiermittel, Wachse und wachsartige Verbindungen, Biozide, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, aber auch lösliche Farbstoffe, Pigmente sowie weitere Füllstoffe oder Katalysatoren. Der Anteil solcher Bestandteile liegt in den hierfür gängigen Bereichen von beispielsweise 0,1 bis 20 Gew.-%, bezogen auf die Gesamtmenge der Beschichtungszusammensetzung.

Der Festkörpergehalt der Beschichtungszusammensetzungen kann je nach den Erfordernissen des Einzelfalls variieren, wobei es allerdings von besonderem Vorteil ist, dass die Zusammensetzung lösemittel- und wasserfrei hergestellt werden kann und trotzdem auf wie unten beschriebene Weise appliziert werden kann. Vorzugsweise liegt der Festkörpergehalt der erfindungsgemäßen Beschichtungszusammensetzung demzufolge bei größer 80 %, besonders bevorzugt bei größer 85 % und ganz besonders bevorzugt bei 90 bis 98 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird die Zusammensetzung für 60 Minuten bei 130°C eingedampft.

Diese Prüfmethode kann, sofern nicht anders angegeben, ebenfalls angewandt werden, um beispielsweise den Anteil verschiedener Komponenten beziehungsweise Bestandteile der Beschichtungszusammensetzung, beispielsweise eines Polycarbonatdiols, am Gesamtgewicht der Zusammensetzung festzulegen beziehungsweise vorzubestimmen. Es kann also der Festkörper einer Dispersion einer Komponente, welche der Zusammensetzung zugegeben werden soll, bestimmt werden. Durch Berücksichtigung des Festkörpers der Dispersion und der in der Zusammensetzung eingesetzten Menge der Dispersion kann dann der Anteil der Komponente an der Gesamtkomposition ermittelt beziehungsweise festgelegt werden. Diese Bestimmungsmethode kann natürlich auch erfolgen, wenn beispielsweise ein Bestandteil kommerziell erworben wird und vom Vertreiber als lösemittel- oder wasserfrei bezeichnet wird. In diesem Fall wird der Festkörper des einzusetzenden Handelsprodukts beispielsweise annähernd 100 % betragen.

In einer bevorzugten Ausführungsform umfasst die erfindungsgemäße Beschichtungszusammensetzung
(1) in der Stammlackkomponente
   (A) 5 bis 30 Gew.-% mindestens eines Polycarbonatdiols,
   (B) 5 bis 30 Gew.-% mindestens eines Polyasparaginsäureesters sowie
   (C) 5 bis 25 Gew.-% mindestens eines mit mindestens einem Organosilan modifizierten Füllstoffs
   sowie
(2) in der Härterkomponente
   (D) 20 bis 60 Gew.-% mindestens eines aliphatische Polyestergruppen enthaltendes Hexamethylendiisocyanat-Isocyanurats mit einem Isocyanatgehalt von 5 bis 23 %,
wobei die Gewichtsangaben jeweils auf das Gesamtgewicht der Beschichtungszusammensetzung bezogen sind.

Innerhalb dieser bevorzugten Ausführungsform sind selbstverständlich alle weiter oben beschriebenen vorteilhaften Varianten, beispielsweise hinsichtlich der Komponenten (A) bis (D) ebenfalls als vorteilhaft anzusehen. Dies gilt für die Kombination der bevorzugten Ausführungsform mit nur einer oder auch mehreren der oben beschriebenen vorteilhaften Varianten.

Bevorzugt ist, dass das Verhältnis der molaren Gesamtmenge von Hydroxylgruppen und Aminogruppen in der Stammlackkomponente zu der molaren Menge an Isocyanatgruppen in der Härterkomponente von 1,0/0,9 bis 1,0/1,5 liegt. Besonders bevorzugt ist demnach, dass das Verhältnis der molaren Gesamtmenge von Hydroxylgruppen der Komponente (A) und Aminogruppen der Komponente (B) in der Stammlackkomponente zu der molaren Menge an Isocyanatgruppen in der Härterkomponente den genannten Wert einnimmt.

Bevorzugt ist, dass von den genannten Bestandteilen (A), (B), (C) und (D) jeweils genau ein Bestandteil in der Beschichtungszusammensetzung enthalten ist.

Alle angegebenen bevorzugten Ausführungsformen sind für sich genommen und in Kombination mit allen weiteren bevorzugten Ausgestaltungen als bevorzugt anzusehen. Die bevorzugten Ausführungsformen gelten nicht nur für die erfindungsgemäße Beschichtungszusammensetzung, sondern auch für die in der Folge beschriebenen Gegenstände, beispielsweise ein Verfahren, in dem die Beschichtungszusammensetzung eingesetzt wird.

Die vorliegende Erfindung betrifft auch ein Verfahren zur Herstellung der erfindungsgemäßen Beschichtungszusammensetzung. Die Herstellung dieser kann unter Einsatz der üblichen und bekannten Mischverfahren und Mischaggregate wie Rührkesseln, Rührwerksmühlen, Extrudern oder Knetern erfolgen. Dabei ist zu beachten, dass es sich bei der erfindungsgemäßen Beschichtungszusammensetzung um eine Zweikomponenten-Zusammensetzung handelt und die Stammlackkomponente sowie die Härterkomponente getrennt voneinander hergestellt und gelagert werden und dann, wie oben beschrieben, erst kurz vor der Applikation des Grundierungsmittels zusammengegeben und gemischt werden. Die Stammlackkomponente enthält dabei in der Regel neben den erfindungswesentlichen Bestandteilen (A), (B) und (C) die gegebenenfalls vorhandenen Zusatzstoffe beziehungsweise Lackadditive. Dieser Stammlackkomponente wird dann die Härterkomponente, welche neben dem erfindungswesentlichen Bestandteil (D) noch weitere Polyisocyanate enthalten kann, kurz vor der Applikation der Beschichtungszusammensetzung auf ein Substrat beigemischt.

Ein weiterer Gegenstand der vorliegenden Erfindung betrifft eine aus der erfindungsgemäßen Beschichtungszusammensetzung hergestellte Beschichtung sowie ein Verfahren zur Herstellung solcher Beschichtungen.

Das Verfahren zur Herstellung einer Beschichtung umfasst die Applikation der Beschichtungszusammensetzung auf ein Substrat. Die Applikation kann über die üblichen Verfahren wie Spritzen (beispielsweise. Airless, Airmix, Druckluft, Heißspritzverfahren oder Induktionsvermischung), Walzen, Rollen, Streichen oder über eine Kartusche erfolgen. Vorzugsweise wird die Beschichtungszusammensetzung durch Rollen oder Streichen aufgebracht.

Um eine gehärtete Beschichtung herzustellen, wird die aufgebrachte Beschichtungszusammensetzung nach der Applikation gehärtet. Vorzugsweise erfolgt die Härtung thermisch. Die applizierte Beschichtungszusammensetzung beziehungsweise die Beschichtung bestehend aus der Zusammensetzung wird dabei bevorzugt Temperaturen von nicht mehr als 80°C, bevorzugt nicht mehr als 60°C ausgesetzt. Besonders bevorzugt ist ein Temperaturbereich von 15 bis 60 °C, ganz besonders von 15 bis 50 °C.

Die Zeitdauer, die für eine vollständige Härtung benötigt wird, kann je nach gewählter Härtungstemperatur stark variieren und liegt beispielsweise im Bereich von 30 min bis 10 Tagen. Beispielsweise kann für eine Dauer von 30 min bei 40°C bis 60°C gehärtet werden oder aber bei nur 15 bis 25°C für eine Dauer von 7 Tagen gehärtet werden.

Bei oder vor der Härtung können auch übliche thermische Härtungsvorrichtungen und/oder Konvektionsverfahren angewandt werden, beispielsweise Durchlauföfen, NIR- und IR- Heizstrahler, Gebläse und Blastunnel. Diese Vorrichtungen können auch miteinander kombiniert werden. Dabei kann eine durch die Temperatur gesteuerte Härtung durch Konvektion unterstützt werden.

Von besonderem Vorteil ist, dass die Beschichtungen auch im noch nicht vollständig gehärteten Zustand eine bereits sehr gute Erosionsbeständigkeit aufweisen. Dies ist besonders vorteilhaft bei der weiter unten beschriebenen Reparatur von Beschichtungen, die Fehlstellen aufweisen. Sind beispielsweise Beschichtungen von Rotorblättern von fest installierten Windenergieanlagen auszubessern, so kann auch ohne eine in dieser Situation verfahrenstechnisch extrem komplizierte Härtung bei erhöhten Temperaturen schon nach kurzer Zeit der Betrieb der Anlage wieder aufgenommen werden. Benötigt ein bestimmtes System beispielsweise in der Regel 7 Tage, um bei 15 bis 25°C vollständig zu härten, so ist schon nach etwa 12 Stunden bei diesen Temperaturen eine so hohe Erosionsbeständigkeit erreicht, dass die Anlage wieder in Betrieb genommen werden kann.

Die Beschichtungen können jeweils eine Trockenfilmschichtdicke von beispielsweise 100 bis 500 µm, vorzugsweise von 150 bis 400 µm aufweisen.

Die erfindungsgemäßen Beschichtungen können auf an sich beliebigen Substraten durch Applikation einer erfindungsgemäßen Beschichtungszusammensetzung auf das Substrat hergestellt werden. Die Substrate können aus den unterschiedlichsten Materialien und Kombinationen von Materialien aufgebaut sein. Vorzugsweise bestehen sie aus Metallen wie Stahl oder Aluminium sowie Kunststoffen wie epoxidharzbasierten Kunststoffen, die glasfaser- (GFK), aramidfaser- (AFK) und/oder kohlefaserverstärkt (CFK) oder beispielsweise mit Hanf oder Sisal naturfaserverstärkt sein können und/oder Glas. Bevorzugte Substrate sind glasfaserverstärkte Epoxidharz-Kunststoffe. Die Substrate können beliebige Größen und Formen aufweisen.

Von Vorteil ist aber, dass gerade sehr große Substrate wie beispielsweise Rotorblätter ohne besondere verfahrenstechnische Schwierigkeiten beschichtet werden können. Denn die erfindungsgemäße Beschichtungszusammensetzung kann bei Raumtemperatur (das heißt 15 bis 25°C) gehärtet werden, sodass keine explizite Zuführung von Wärme, das heißt thermischer Energie, im Rahmen einer komplexen Anlagentechnik notwendig ist, um eine gehärtete Beschichtung herzustellen. Aus einer zunächst durch die Applikation der Beschichtungszusammensetzung hergestellten Beschichtung entsteht also durch einfache Lagerung bei Raumtemperatur schließlich eine gehärtete Beschichtung.

Aufgrund der sehr guten Erosionsbeständigkeit der Beschichtungen sind bevorzugte Substrate solche, die die der Regen- oder Sanderosion besonders stark ausgesetzt sind. Als Substrate können Rotorblätter, Luft- oder Landfahrzeuge, Schiffe, Bauwerke oder Pipelines in Frage kommen. Bevorzugte Substrate sind Rotorblätter von Windenergieanlagen, Hubschraubern oder Schiffsschrauben sowie Luftfahrzeuge wie beispielsweise Flugzeuge. Insbesondere sind Rotorblätter von Windenergieanlagen und Flugzeuge geeignete Substrate.

Aus oben Gesagten folgt, das auch ein Substrat, das mit einer erfindungsgemäßen Beschichtung beschichtet ist, Gegenstand der vorliegenden Erfindung ist. Genauso folgt aus oben Gesagten, dass auch die Verwendung der erfindungsgemäßen Beschichtungszusammensetzung sowie die Verwendung einer erfindungsgemäßen Beschichtung zur Verbesserung der Erosionsbeständigkeit von Substraten, insbesondere den oben genannten Substraten, Gegenstand der vorliegenden Erfindung sind.

Möglich ist auch, dass unter Einsatz einer erfindungsgemäßen Beschichtungszusammensetzung eine Mehrschichtbeschichtung hergestellt wird. Auch eine solche Mehrschichtbeschichtung ist Gegenstand der vorliegenden Erfindung. Die aus der Beschichtungszusammensetzung hergestellte Beschichtung ist also in einer Mehrschichtbeschichtung enthalten. Bevorzugt sind Mehrschichtbeschichtungen, in denen eine erfindungsgemäße Beschichtung die Deckbeschichtung darstellt. Auf diese Weise wird ein technischer Effekt der erfindungsgemäßen Beschichtung, nämlich die hervorragende Erosionsbeständigkeit, optimal ausgenutzt. Dies bedeutet, dass alle weiteren Beschichtungsschichten unterhalb der erfindungsgemäßen Beschichtung und damit zwischen dem Substrat und der erfindungsgemäßen Beschichtung angeordnet sind. Ein Substrat, das mit einer erfindungsgemäßen Beschichtung beschichtet ist, muss also nicht in direktem Kontakt mit dieser Beschichtung stehen. Dazwischen können weitere Schichten, beispielsweise zumindest eine an sich bekannte Füllerschicht, angeordnet sein.

Die erfindungsgemäße Beschichtungszusammensetzung eignet sich insbesondere zur Beschichtung von Ecken und Kanten, insbesondere Kanten, von Substraten. Die Verwendung der erfindungsgemäßen Beschichtungszusammensetzung sowie die Verwendung einer erfindungsgemäßen Beschichtung zur Verbesserung des Kantenschutzes ist also auch Gegenstand der vorliegenden Erfindung. Gerade Kanten von Substraten, beispielsweise den oben genannten Substraten, sind im Gebrauch erodierenden Einflüssen besonders stark ausgesetzt.

Von besonderem Vorteil ist, dass die erfindungsgemäßen Beschichtungen sehr gut schleifbar sind, insbesondere eine gute Schleifbarkeit und eine hohe Erosionsbeständigkeit miteinander vereinen. Wie eingangs festgehalten, ist nur über eine gute Schleifbarkeit gewährleistet, dass im Rahmen der Vorbehandlung einer auszubessernden beschichteten Oberfläche diese Oberfläche angemessen für die Reparatur vorbereitet werden kann, um sie beispielswiese als effektiven Haftgrund zu konditionieren.

Demnach ist auch Gegenstand der vorliegenden Erfindung ein Verfahren zur Reparatur von auf einem Substrat angeordneten erfindungsgemäßen Beschichtungen, welche Fehlstellen besitzen. Genauso ist damit ein Verfahren zur Reparatur von Fehlstellen aufweisenden, auf einem Substrat angeordneten Mehrschichtbeschichtungen, welche eine erfindungsgemäße Beschichtung als Deckbeschichtung umfassen, Gegenstand der vorliegenden Erfindung.

Fehlstellen entstehen mit der Zeit durch die enorme Belastung von Beschichtungen durch erodierende Einflüsse. Selbst wenn die erfindungsgemäßen Beschichtungen eine deutlich verbesserte Erosionsbeständigkeit aufweisen, wird über die Zeit eine Reparaturbedürftigkeit entstehen. Das heißt es werden sich in einer Originalbeschichtung gewisse Fehlstellen bilden, die ausgebessert werden müssen. Zur Ausbesserung müssen die Fehlstellen in der Regel einer Schleifbehandlung unterzogen werden. Dabei werden bekanntermaßen noch verbliebende Beschichtungsreste in der Fehlstelle entfernt und gegebenenfalls auch die Übergänge zwischen Fehlstelle und intakter Beschichtung geschliffen. Je nachdem, ob sich die Fehlstelle nur auf die Deckbeschichtung begrenzt oder auch tiefer liegende Beschichtungen umfasst (beispielsweise eine Füllerschicht), können im Rahmen der Reparatur vor der Applikation einer erfindungsgemäßen Beschichtungszusammensetzung auch noch weitere Zusammensetzungen appliziert werden, beispielsweise ein Füller.

Das Verfahren zur Reparatur von auf einem Substrat angeordneten erfindungsgemäßen Beschichtungen, welche Fehlstellen besitzen, umfasst also das Schleifbehandeln der Fehlstellen und die anschließende Applikation einer erfindungsgemäßen Beschichtungszusammensetzung auf die schleifbehandelte Fehlstelle. Selbstverständlich wird im Anschluss daran in der Regel eine wie oben beschriebene Härtung der Reparaturbeschichtung erfolgen.

In der Folge wird die vorliegende Erfindung anhand von Beispielen erläutert.

### Beispiele

### 1. Prüfmethoden

### 1.1 Allgemeines

Zur labortechnischen Bestimmung der Erosionsbeständigkeit können generell unterschiedliche Gerätschaften verwendet werden, bei denen entweder das zu erodierende beschichtete Substrat durch das Erosionsmedium bewegt wird oder das Substrat feststeht und vom Erosionsmedium umströmt wird. Ein feststehender Prüfkörper kann beispielsweise durch eine Hochdruck-Wasserstrahl-Technik, welche beispielsweise. beim Wasserstrahlschneiden verwendet wird, getestet werden. Die Erosionswirkung wird gesteuert durch Wasserdruck, Abstand zum Werkstück sowie Düsengröße und -art. Durch die Mitverwendung von Sand, Korund oder Siliziumcarbid kann die Wirkung weiter verstärkt werden. Weiterhin ist Sandstrahlen oder Dampfstrahlen denkbar, wobei ebenfalls durch den anliegenden Druck, Düsengröße und Abstand zum Werkstück die Erosionswirkung variiert und den Realbedingungen angepasst werden kann.

Beim Regenerosionstest für bewegte Prüfkörper wird das zu erodierende beschichtete Substrat an einem Rotor oder einer Scheibe befestigt und durch die erzeugte Radialgeschwindigkeit durch einen Vorhang aus Wassertropfen oder Gemischen mit Salz oder Sand bewegt. Das derzeit gängigste Prüfszenario, welches beispielsweise im Bereich der Windenergie verwendet wird, arbeitet bei Geschwindigkeiten von 140 m/s und einer Regenmenge von 30 l/h. Im Bereich der Flugzeugindustrie werden Geschwindigkeiten von bis zu 220 m/s bei vergleichbarer Regenmenge geprüft. Die Prüfungen zur Regenerosionsbeständigkeit können nach der Norm ASTM G 73 erfolgen. Die unter diese Norm fallenden Aufbauten sind individuell und können über Standards miteinander verglichen werden.

Den genannten Prüfmöglichkeiten ist gemein, dass reale Geschwindigkeiten, wie beispielsweise Umfangsgeschwindigkeiten von Rotorblättern oder Reisefluggeschwindigkeiten von Flugzeugen simuliert werden und die Schadensbilder den real auftretenden Schadensbildern ähnlich sind.

Die Prüfung der Shorehärte verläuft über das Eindrücken eines festgelegten Eindruckkörpers in das Prüfmaterial. Sie kann nach DIN EN ISO 868 geprüft werden. Verwendet werden können zwei unterschiedliche Shore-Durometer (Typ A, Typ D). Je höher der gemessene Wert (Werte 0 bis 100) innerhalb einer Skalierungsebene (A, D) ist, desto weniger weit kann die Spitze des Eindruckkörpers in das Prüfmaterial (die Beschichtungsoberfläche) hineingedrückt werden. Das heißt ein hoher Wert entspricht einer höheren Härte des Materials.

Zwar sind die Skalierungen A und D nicht direkt miteinander vergleichbar, jedoch gilt grundsätzlich, dass die D Skalierung für härtere Materialien gilt. So empfiehlt die genannte DIN Norm, dass Messungen mit dem Typ D-Durometer durchgeführt werden, wenn mit dem Typ A-Durometer Werte über 90 erhalten werden und dass Messungen mit dem Typ A-Durometer vorgenommen werden, wenn mit dem Typ D-Durometer Werte weniger 20 erhalten werden.

Aus dem Stand der Technik ist bekannt, dass flexible bis zähelastische Beschichtungen, welche damit aufgrund einer nicht zu hohen Härte sehr erosionsbeständig sind, eine Shore-Härte von A 50 bis A 90 aufweisen (WO 2012/032113 A1).

### 1.2 Testbedingungen

Im Rahmen der Beispiele erfolgte die Prüfung der Regenerosionsbeständigkeit nach der Norm ASTM G 73. Die Tests wurden auf einem hauseigenen Regenerosions-Prüfstand durchgeführt. Die Prüfkörper werden in bestimmten Zeitabständen (15 Minuten) bei definierter Geschwindigkeit (140 m/s) durch einen Tropfenvorhang geschleudert. Die Regenmenge wird dabei durch die angelegte Durchflussrate ebenfalls konstant gehalten (30 l/h). Die Tropfengrößen des angelegten "Regens" betragen dabei durchschnittlich 5-6 mm. Die Prüfungen erfolgen bei einer Temperatur von 20 bis 25 °C. Die Auswertung erfolgt visuell. Die Erosionsbeständigkeit entspricht der Zeit bis zum ersten Durchscheinen des Substrates.

Die Shorehärte wird nach DIN EN ISO 868 bestimmt.

### 2. Herstellung von Beschichtungszusammensetzungen und gehärteten Beschichtungen

Die Stammlackkomponente und Härterkomponente einer Beschichtungszusammensetzung wurden durch Zusammengeben der jeweiligen Bestandteile und inniges Vermischung in einem Dissolver hergestellt (Tabelle 1).

**Tabelle 1**

| **Bestandteil** | **Gewichtsteile** |
|---|---|
| | |

| **Stammlackkomponente** | |
|---|---|
| Lineares, aliphatisches Polycarbonatdiol (A) mit endständigen Hydroxylgruppen | 30,0 |
| Molekularsieb | 4,0 |
| Polyasparaginsäureester (B) | 30,0 |
| Organosilanmodifiziertes Wollastonit (C) | 23,75 |
| Farbpigment | 7,8 |
| Additivmischung | 4,40 |
| Katalysatormischung | 0,05 |
| **Summe** | **100** |
| | |

| **Härterkomponente** | |
|---|---|
| Aliphatische Polyestergruppen enthaltendes (HDI)-Isocyanurat (D) mit einem NCO-Gehalt von 11,0 | 89,5 |
| Mischung von HDI- und IPDI-basierten Polyisocyanaten | 10,5 |
| **Summe** | **100** |

Anschließend wurden 100 Teile der Stammlackkomponente mit 81 Teilen der Härterkomponente homogen vermischt und direkt auf einen mit einem handelsüblichen polyharnstoffbasierten Porenfüller vorbeschichteten Epoxidharz-Prüfkörper appliziert (Streichapplikation). Die Härtung erfolgte durch Lagerung über einen Zeitraum von sieben Tagen bei 20 bis 25°C. Die Trockenschichtdicke betrug 300 Mikrometer.

Als Vergleichszusammensetzung beziehungsweise Vergleichsmehrschichtbeschichtung wurde das Beispiel 2 der WO 2012/032113 herangezogen.

Anschließend wurden die auf dem Substrat angeordneten Mehrschichtbeschichtungen hinsichtlich der Regenerosionsbeständigkeit und der Shore-Härte untersucht (Tabelle 2).

**Tabelle 2**

| | **Erfindung** | **Vergleich** |
|---|---|---|
| Dauer Regenerosionstest | 600 Minuten | 160 Minuten |
| Shore-Härte | D25 | A65 |

Es zeigt sich, dass die auf dem Substrat angeordneten Mehrschichtbeschichtungen, die eine erfindungsgemäße Beschichtung als Deckbeschichtung enthalten, eine deutlich verbesserte Erosionsbeständigkeit aufweisen. Zugleich hat sich überraschenderweise gezeigt, dass diese Beschichtung trotzdem vergleichsweise hart ist und nicht den für erosionsbeständige Beschichtungen typischen flexiblen bis zähelastischen Charakter aufweist. Die höhere Härte geht auch mit der erwarteten besseren Schleifbarkeit einher. Während sich die erfindungsgemäße Beschichtung sehr gut schleifen lässt, ist dies nicht für die Vergleichsbeschichtung der Fall. Während des Schleifprozesses wird diese eher weiche Beschichtung unkontrolliert über das Substrat geschoben, ohne das ein angemessen vorbereiteter Untergrund für die Applikation weiterer Beschichtungsmittel zur Reparatur geschaffen werden kann.

## Patentansprüche

1. Zweikomponenten-Beschichtungszusammensetzung umfassend
(1) eine Stammlackkomponente umfassend
(A) mindestens ein Polycarbonatdiol,
(B) mindestens einen Polyasparaginsäureester sowie
(C) mindestens einen mit mindestens einem Organosilan modifizierten Füllstoff
sowie
(2) eine Härterkomponente umfassend
(D) mindestens ein aliphatische Polyestergruppen enthaltendes Hexamethylendiisocyanat-Isocyanurat mit einem Isocyanatgehalt von 5 bis 23 %.

2. Zweikomponenten-Beschichtungszusammensetzung nach Anspruch 1, **dadurch gekennzeichnet, dass** das mindestens eine Polycarbonatdiol (A) eine OH-Zahl von 50 bis 500 mg KOH/g aufweist.

3. Zweikomponenten-Beschichtungszusammensetzung nach Anspruch 1 oder 2, **dadurch gekennzeichnet, dass** das mindestens eine Polycarbonatdiol (A) ein aliphatisches und lineares Polycarbonatdiol ist.

4. Zweikomponenten-Beschichtungszusammensetzung nach einem der Ansprüche 1 bis 3, **dadurch gekennzeichnet, dass** der mindestens eine Polyasparaginsäureester (B) eine Aminzahl von 120 bis 300 mg KOH/g aufweist.

5. Zweikomponenten-Beschichtungszusammensetzung nach einem der Ansprüche 1 bis 4, **dadurch gekennzeichnet, dass** der mindestens eine Polyasparaginsäureester (B) aliphatisch ist.

6. Zweikomponenten-Beschichtungszusammensetzung nach einem der Ansprüche 1 bis 5, **dadurch gekennzeichnet, dass** der mindestens eine mit mindestens einem Organosilan modifizierten Füllstoff (C) ausgewählt wird aus der Gruppe der mit mindestens einem Organosilan modifizierten Silikate, insbesondere Wollastonit, Siliciumdioxid oder Mischung davon.

7. Zweikomponenten-Beschichtungszusammensetzung nach einem der Ansprüche 1 bis 6, **dadurch gekennzeichnet, dass** der mit mindestens einem Organosilan modifizierte Füllstoffe (C) herstellbar ist durch Modifizierung eines anorganisches Füllstoffs mit Organosilanen der Formel (V)
X₄₋ₙ₋ₘSi-Rₙ(-A-B)ₘ (V)
wobei
X = OH, Halogen, Alkoxy, insbesondere Methoxy und Ethoxy, Aryloxy,
R = Alkyl, bevorzugt C₁ bis C₁₂-Alkyl, Phenyl oder H,
A = zweibindiger organischer Rest, insbesondere zweibindiger Alkylenrest, bevorzugt C₁ bis C₆-Alkylen, insbesondere C₁ bis C₃-Alkylen,
B = Amino-, Hydroxyl-, Epoxy-, Epoxypropyloxy, Hydroxyalkyl-, Acetoxy-, Isocyanat-, Acryloxy-, Methacryloxy-, Imidazol-, Ureido-,Vinylgruppe,
n, m = 0,1,2,3, mit n+m ≤ 3, bevorzugt 1 ≤ n+m ≤ 3.

8. Zweikomponenten-Beschichtungszusammensetzung nach einem der Ansprüche 1 bis 7, **dadurch gekennzeichnet, dass** das mindestens ein aliphatische Polyestergruppen enthaltende Hexamethylendiisocyanat-Isocyanurat, bezogen auf die Gesamtmenge der in der Beschichtungszusammensetzung enthaltenen Polyisocyanate, in einem Anteil von mindestens 50 Gew.-%, bevorzugt 70 bis 95 Gew.-%, enthalten ist.

9. Verfahren zur Herstellung einer Beschichtung auf einem Substrat umfassend die Applikation einer Beschichtungszusammensetzung gemäß einem der Ansprüche 1 bis 8 auf ein Substrat.

10. Verfahren nach Anspruch 9, **dadurch gekennzeichnet, dass** die durch Applikation hergestellte Beschichtung bei einer Temperatur von nicht mehr als 80°C, bevorzugt 15 bis 60°C, gehärtet wird.

11. Verfahren nach Anspruch 9 oder 10, wobei es sich bei dem Substrat um ein Metallsubstrat oder ein Kunststoffsubstrat handelt.

12. Beschichtung, herstellbar nach einem Verfahren gemäß einem der Ansprüche 9 bis 11.

13. Mehrschichtbeschichtung, die eine Beschichtung nach Anspruch 12 als Deckbeschichtung umfasst.

14. Substrat, das mit einer Beschichtung gemäß Anspruch 12 und/oder einer Mehrschichtbeschichtung nach Anspruch 13 beschichtet ist.

15. Verwendung einer Beschichtung gemäß Anspruch 13 zur Verbesserung der Erosionsbeständigkeit von Substraten.

## Claims

1. Two-component coating composition comprising
(1) a paint base component comprising
(A) at least one polycarbonate diol,
(B) at least one polyaspartic ester, and
(C) at least one filler modified with at least one organosilane,
and
(2) a hardener component comprising
(D) at least one hexamethylene diisocyanate isocyanurate containing aliphatic polyester groups and having an isocyanate content of 5% to 23%.

2. Two-component coating composition according to Claim 1, **characterized in that** said at least one polycarbonate diol (A) has an OH number of 50 to 500 mg KOH/g.

3. Two-component coating composition according to Claim 1 or 2, **characterized in that** said at least one polycarbonate diol (A) is an aliphatic and linear polycarbonate diol.

4. Two-component coating composition according to any of Claims 1 to 3, **characterized in that** said at least one polyaspartic ester (B) has an amine number of 120 to 300 mg KOH/g.

5. Two-component coating composition according to any of Claims 1 to 4, **characterized in that** said at least one polyaspartic ester (B) is aliphatic.

6. Two-component coating composition according to any of Claims 1 to 5, **characterized in that** said at least one filler (C) modified with at least one organosilane is selected from the group of silicates, more particularly wollastonite, silicon dioxide, or mixture thereof, modified with at least one organosilane.

7. Two-component coating composition according to any of Claims 1 to 6, **characterized in that** said filler (C) modified with at least one organosilane is preparable by modification of an inorganic filler with organosilanes of the formula (V)
X₄₋ₙ₋ₘSi-Rₙ(-A-B)ₘ (V)
where
X = OH, halogen, alkoxy, more particularly methoxy and ethoxy, aryloxy,
R = alkyl, preferably C₁ to C₁₂ alkyl, phenyl, or H,
A = divalent organic radical, more particularly divalent alkylene radical, preferably C₁ to C₆ alkylene, more particularly C₁ to C₃ alkylene,
B = amino, hydroxyl, epoxy, epoxypropyloxy, hydroxyalkyl, acetoxy, isocyanate, acryloxy, methacryloyloxy, imidazole, ureido, vinyl group, n, m = 0, 1, 2, or 3, with n+m ≤ 3, preferably 1 ≤ n+m ≤ 3.

8. Two-component coating composition according to any of Claims 1 to 7, **characterized in that** the at least one hexamethylene diisocyanate isocyanurate containing aliphatic polyester groups is present, based on the total amount of the polyisocyanates present in the coating composition, in a fraction of at least 50 wt%, preferably 70 to 95 wt%.

9. Method for producing a coating on a substrate, comprising the application of a coating composition according to any of Claims 1 to 8 to a substrate.

10. Method according to Claim 9, **characterized in that** the coating produced by application is cured at a temperature of not more than 80°C, preferably 15 to 60°C.

11. Method according to Claim 9 or 10, the substrate being a metal substrate or a plastics substrate.

12. Coating producible by a method according to any of Claims 9 to 11.

13. Multicoat coating which comprises as topcoat a coating according to Claim 12.

14. Substrate coated with a coating according to Claim 12 and/or with a multicoat coating according to Claim 13.

15. Use of a coating according to Claim 13 for improving the erosion resistance of substrates.

## Revendications

1. Composition de revêtement bicomposante, comprenant :
(1) un composant vernis de base, comprenant :
(A) au moins un polycarbonate-diol,
(B) au moins un ester de l'acide polyasparaginique, et
(C) au moins une charge modifiée avec au moins un organosilane,
ainsi que
(2) un composant agent de durcissement comprenant :
(D) au moins un isocyanurate de diisocyanate d'hexaméthylène contenant des groupes polyester aliphatiques ayant une teneur en isocyanate de 5 à 23 %.

2. Composition de revêtement bicomposante selon la revendication 1, **caractérisée en ce que** ledit au moins un polycarbonate-diol (A) présente un indice OH de 50 à 500 mg de KOH/g.

3. Composition de revêtement bicomposante selon la revendication 1 ou 2, **caractérisée en ce que** ledit au moins un polycarbonate-diol (A) est un polycarbonate-diol aliphatique et linéaire.

4. Composition de revêtement bicomposante selon l'une quelconque des revendications 1 à 3, **caractérisée en ce que** ledit au moins un ester de l'acide polyasparaginique (B) présente un indice d'amine de 120 à 300 mg de KOH/g.

5. Composition de revêtement bicomposante selon l'une quelconque des revendications 1 à 4, **caractérisée en ce que** ledit au moins un ester de l'acide polyasparaginique (B) est aliphatique.

6. Composition de revêtement bicomposante selon l'une quelconque des revendications 1 à 5, **caractérisée en ce que** ladite au moins une charge (C) modifiée avec au moins un organosilane est choisie dans le groupe constitué par les silicates modifiés avec au moins un organosilane, notamment la wollastonite, le dioxyde de silicium ou leurs mélanges.

7. Composition de revêtement bicomposante selon l'une quelconque des revendications 1 à 6, **caractérisée en ce que** les charges (C) modifiées avec au moins un organosilane peuvent être fabriquées par modification d'une charge inorganique avec des organosilanes de la formule (V) :
X₄₋ₙ₋ₘSi-Rₙ(-A-B)ₘ (V)
dans laquelle
X = OH, halogène, alcoxy, notamment méthoxy et éthoxy, aryloxy,
R = alkyle, de préférence alkyle en C₁ à C₁₂, phényle ou H,
A = radical organique bivalent, notamment radical alkylène bivalent, de préférence alkylène en C₁ à C₆, notamment alkylène en C₁ à C₃,
B = groupe amino, hydroxyle, époxy, époxypropyloxy, hydroxyalkyle, acétoxy, isocyanate, acryloxy, méthacryloxy, imidazole, uréido, vinyle, n, m = 0, 1, 2, 3, avec n+m ≤ 3, de préférence 1 ≤ n+m ≤ 3.

8. Composition de revêtement bicomposante selon l'une quelconque des revendications 1 à 7, **caractérisée en ce que** ledit au moins un isocyanurate de diisocyanate d'hexaméthylène contenant des groupes polyester aliphatiques est contenu, par rapport à la quantité totale des polyisocyanates contenus dans la composition de revêtement, en une proportion d'au moins 50 % en poids, de préférence de 70 à 95 % en poids.

9. Procédé de fabrication d'un revêtement sur un substrat, comprenant l'application d'une composition de revêtement selon l'une quelconque des revendications 1 à 8 sur un substrat.

10. Procédé selon la revendication 9, **caractérisé en ce que** le revêtement fabriqué par l'application est durci à une température inférieure ou égale à 80 °C, de préférence de 15 à 60 °C.

11. Procédé selon la revendication 9 ou 10, dans lequel le substrat consiste en un substrat métallique ou un substrat en matière plastique.

12. Revêtement, pouvant être fabriqué par un procédé selon l'une quelconque des revendications 9 à 11.

13. Revêtement multicouche, qui comprend un revêtement selon la revendication 12 en tant que revêtement supérieur.

14. Substrat, qui est revêtu avec un revêtement selon la revendication 12 et/ou un revêtement multicouche selon la revendication 13.

15. Utilisation d'un revêtement selon la revendication 13 pour l'amélioration de la résistance à l'érosion de substrats.
